# EUROPEAN PATENT SPECIFICATION

(11) **EP 1 460 235 B1**
(45) Date of publication and mention of the grant of the patent: **27.04.2011**
(21) Application number: 04075865.8
(22) Date of filing: 18.03.2004
(51) Int. Cl.: E21B 17/08, E21B 17/046, F16L 25/06

(54) **Apparatus to mechanically load a compression member**
Apparat zum mechanischen Laden von zur Kompression beitragenden Teilen
Appareil pour charger de facon mecaniques des pièces travaillant à la compression

(43) Date of publication of application: 22.09.2004
(60) Divisional application: 10185300.0
(73) Proprietor: Steinbock Machinery Corporation, Carnegie, PA 15106 (US)
(72) Inventor: Steinbock, Allan T., Pittsburgh PA 15220 (US); Steinbock, Robert C., Bridgeville PA 15017 (US); Felldin, Tony, Fjaras 43033 (NO); Ploke, Gerhard, 8735 Rueeterswil (CH); Schneider, Nobert, 8730 Uznach (CH)
(74) Representative: Elzaburu Marquez, Alberto

(56) References cited:
- EP-A1- 0 405 951
- GB-A- 2 340 571
- US-A- 3 004 671
- US-A- 3 037 327
- US-A- 3 256 069
- US-A- 3 345 087
- US-A- 4 094 539
- US-A- 4 660 687
- US-A- 5 069 587
- US-A- 5 075 950

## Description

### Background of the Invention

### Field of the invention:

The present application relates to a compression generator using a plurality of jackbolts to apply a mechanical load against a compression member for forming a mechanical connection between opposing fixed and moveable parts, and more particularly, the compression generator uses jackbolts threadedly engaged to a main element which is in turn releasable joined to a fixed part to generate friction by transmitting a pushing force against a surface of a moveable part. The main element may take the form of a core releasable engaged with a support and carrying the jackbolts for compressing a compression element against a compression seat.

Description of the prior art: One aspect of the present invention is addressed to securing pipes in an end to end relation for creating a high security joint between the pipes to resist the stress and strain encountered in sub-sea environments as, for example, commonly encountered in the offshore petrochemical industry. One intended use in such a sub-sea environment is the connection of large diameter pipes so-called risers, which connect an oil well on the seabed with a terminal at the water surface. When connecting pipe elements using friction to obtain a locking effect in a sub-sea environment, it is difficult with existing technology to withstand the strain occurring when the pipe joint is exposed to waves, axial tensions, vibrations, and loads directed sideways to the extended length of the joined pipes. The reliability of friction as the locking mechanism is therefore often inadequate.

Conventional technology relies solely on the application of torque to one thread in pipe couplings in order to create friction for locking joining male and female elements. This type of friction locking is not always reliable to form a sufficiently secure locking when the locking operation occurs in sub-sea environments where the pipe joints are exposed to sever localized strains. A single bolted joint for pressing two elements apart is detrimentally sensitive to vibrations causing unintentionally loosing of the bolted joint. The present invention provides an new frictional locking system using an axial friction device for pressing mechanical elements apart in such a way that friction is created between the friction device and two or more mechanical elements comprising part of the construction.

GB 2 340 571 B which is considered as the closest prior art discloses a compression generator for forming a mechanical connection between opposing box portions and pin portions of a riser by transmitting a pushing force against a surface of said pin portions, wherein the compression generator further comprises a threaded actuator in a confronting relation to said pin portions and a jackbolt received in one hole of said actuator.

Another aspect of the present application is addressed to using compression generators for assembling components in diverse machinery but particularly pressing a component part against a sealing surface to contain pressurized fluid mediums. Examples of such machinery include high pressure plunger pumps and air compressors powered by prime movers generally having 1000 or more horsepower. Such machinery is frequently located in hostile environments where servicing components subject to wear and tear maybe required at regular intervals. Plunger pumps, for example, include a valve manifold containing suction and pressure valves seated by threaded tubes driven against a closure plate by directing impact blows to a torque bar inserted transversely in sidewall openings in the tubes.

It is an object of the present invention to provide a compression generator using friction locking to achieve a considerably higher clamping force by the provision of several jackbolts fitted in threads in either a threaded male or female element, which are used for pressing the friction element against the other element of the joint so that friction is created and the load that gives rise to the desired friction is thus divided between several separate jackbolts.

It is a further object of the present invention to generate a greater and evenly distributed frictional locking for joining pipes in an end-to-end relation in a joint than in previously used technology to produce a joint considerably more resistant to vibrations and axial, radial and sideway directed strains.

It is another object of the present invention to provide a compression generator using friction locking established by a construction and arrangement of parts constructed to fit together in a simple and quick manner.

It is another object of the present application to provide a compression generator using jackbolts to inhibit sliding movement between members forming a barrier used to confine a volume of highly pressurized fluid.

The present application discloses also compression generator using jackbolts to generate sufficient friction to prevent unwanted leakage of pressurized fluid between seated sealing surfaces.

The present application discloses also compression generator using jackbolts for installing an access plug in a manifold using a core element to form a jackbolt assembly for use as a mechanically operative stress-generating unit releasable attached to the manifold.

The present application discloses also compression generator using jackbolts for installing an access plug in a manifold using a core element to form a jackbolt assembly and a pull back restraint for use as a mechanically operative stress-generating unit releasable attached to the manifold.

The present application discloses also compression generator having a support juxtaposition from a compression seat in a manifold closed by a core releasable interlocked with the manifold and carrying a compression element between the core and the compression seat such that a plurality of jackbolts threadedly engaged with the core compresses the compression element against the compression seat.

It is another object of the present invention to provide a compression generator to more evenly distribute a compression force about a surface area where friction is created by the compression generator to form a joint between a support juxtaposition from a joining member to form a joint considerably more resistant to vibrations and axial, radial and sideway directed forces.

### Summary of the Invention

According to the present invention there is provided a compression generator including a plurality of jackbolts receiving torque to generate a pushing force in an axial direction thereof for forming a mechanical connection between opposing fixed and moveable parts, the jackbolts threadedly engaged to a main element which is in turn releasable joined to the fixed part of the mechanical connection to generate friction by transmitting the pushing force against a surface of the moveable part of the mechanical connection. According to the invention the compression generator comprises the features indicated in the appended claims.

### Brief description of the several views of the drawings

The present invention will be more fully understood when the following description is read in light of the accompanying drawings in which:
Figure 1 is a plane view of a first embodiment of the a compression generator embodying the features of the present invention;
Figure 2 is a sectional view taken along lines 2 - 2 of Figure 1;
Figure 3 is a plane view taken along lines 3 - 3 of Figure 2;
Figure 4 is a sectional view taken along lines 4 - 4 of Figure 2;
   The remaining drawings relate to arrangements which are not claimed, wherein in particular
Figure 5 is an isometric illustration of of a further compression generator;
Figure 6 is a sectional view taken along lines 6 - 6 of Figure 5;
Figure 7 is a plane view taken along lines 7 - 7 of Figure 5;
Figure 8 is a sectional view similar to Figure 6 and illustrating a third embodiment of compression generators embodying the features of the present invention;
Figure 9 is a plane view taken along lines 8 - 8 of Figure 8;
Figure 10 illustrates a still further compression generator for installing a high-pressure fluid orifice in an accumulator assembly; and
Figure 11 is a sectional view taken along lines 11 -11 of Figure 10.

### Detailed description of the invention

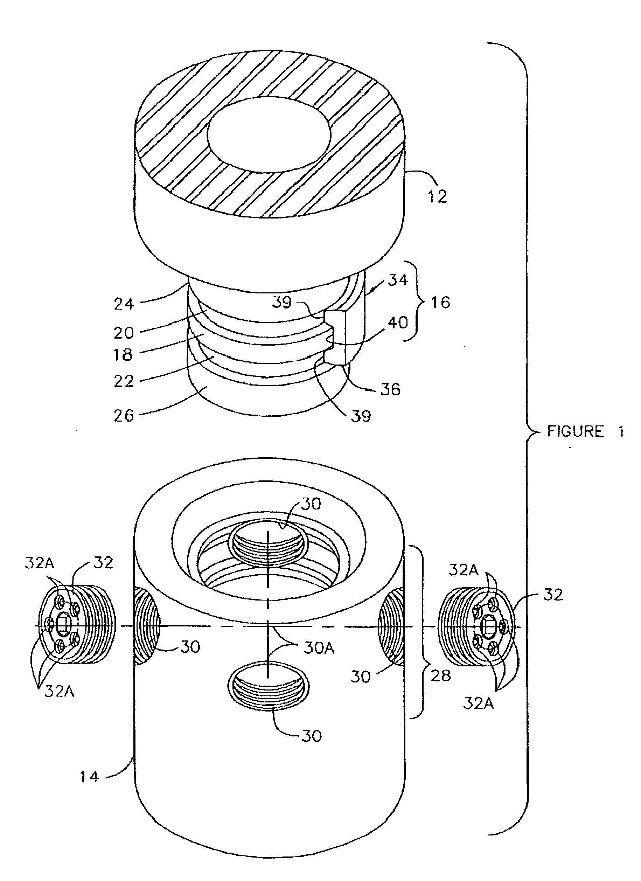

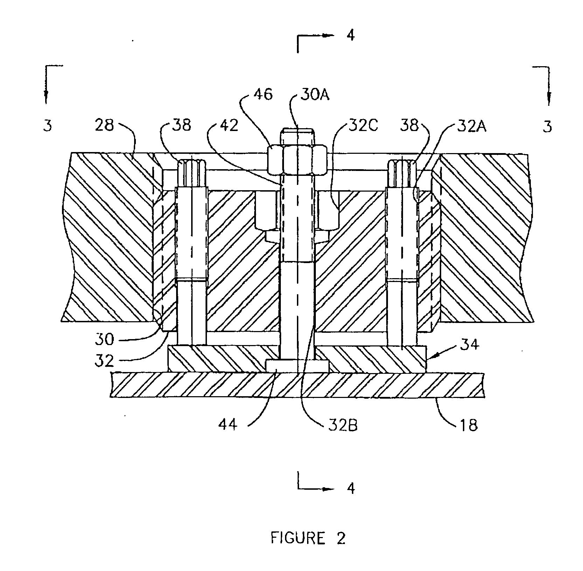

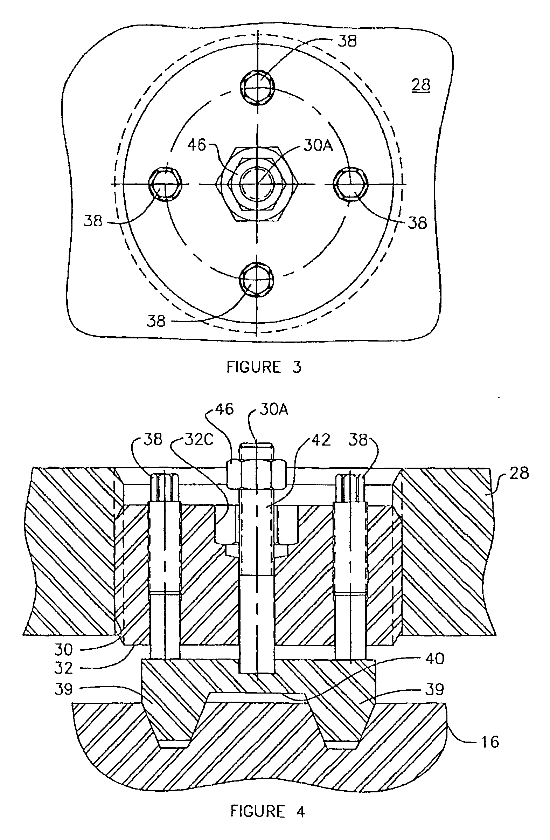

Figures 1-4 illustrate a first embodiment of a compression generator 10 for generating pushing forces in relative opposite directions e.g. along axial paths, sufficient to form a frictional interconnection between elongated pipe members 12 and 14 embodied as relatively large diameter pipes of the type used in sub-sea installations for offshore oil and gas wells. The pipe member 12 includes an end portion 16 containing a centrally located annular ring section 18 bounded by annular groves 20 and 22 terminating at annular ring sections 24 and 26 of reduced outside diameters as compared with the outside diameter of the pipe 12. The pipe member 14 includes a connector portion 28 constructed with at least one, preferably four, threaded bores 30 arranged with the central axes 30A of each bore, preferable lying in a common plane that is perpendicular to the longitudinal and central axis of the pipe member 14. When four threaded bores are provided, they are preferably arranged as opposed pairs having the axes 30A of a pair of coaxially arranged. Threads on the external peripheral edge of a disk shaped carrier 32 engage with the threads of each of the bores 30 for mounting the carrier in a load transferring relation in the connector portion 28 of the pipe member 14. The thickness of the disk shaped threaded carrier approximates the wall thickness of the end portion 28 of the pipe member 14. The threaded carrier 32 is provided with a plurality of drilled and tapped holes 32A spaced about a bolt circle centered on the axis 30A to receive a jack bolt 38 having a sufficient length to present an end portion extending into an abutting relation with an arcuate compression shoe 34. The compression shoe includes an arcuate base 36 containing two parallel and side-by-side compression ribs 39 spaced apart by a central recess 40 to establish interlocking engagement with the annular support ring section 18 and the annular groves 20 and 22, as shown in Figure 1. This arcuate inter fitting relationship of the compression shoe pressed against the support ring section 18 by the pushing force generated by the jack bolts 38 establishes a mechanical interconnection between the large diameter pipes of great and long lasting integrity. Positioning of the compression shoe in compression generator 10 before generating the pushing forces is limited to linear movement by sliding of a spindle 42 in bore 32B along axis 30A while joined by a T-shaped end 44 mounted in a corresponding shaped T-slot formed in the arcuate base 34. A nut 46 mounted on an outwardly extending threaded end of the spindle 42 is dimensioned to seat in a counter bore 32C to provide guided movement of the spindle throughout a desired range in an annular gap between the end portions 16 and connector portion 28.

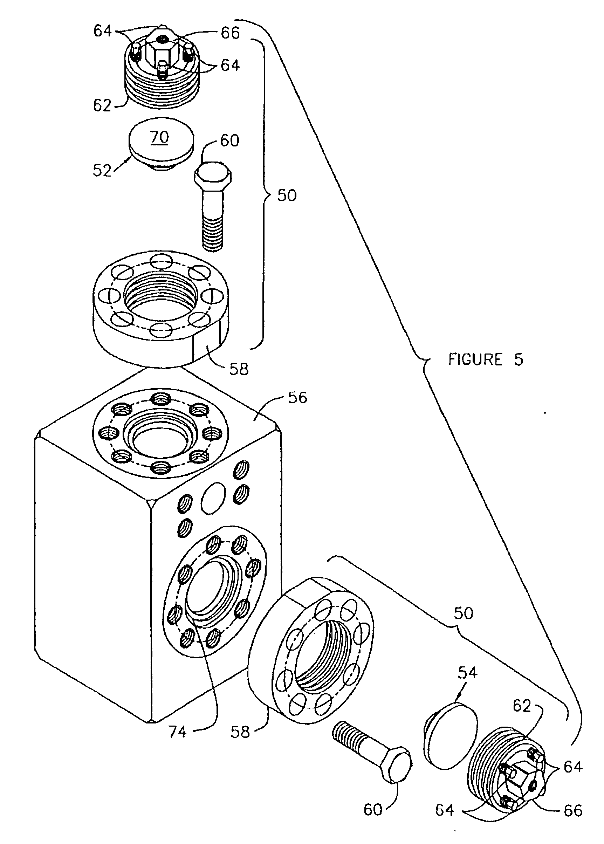

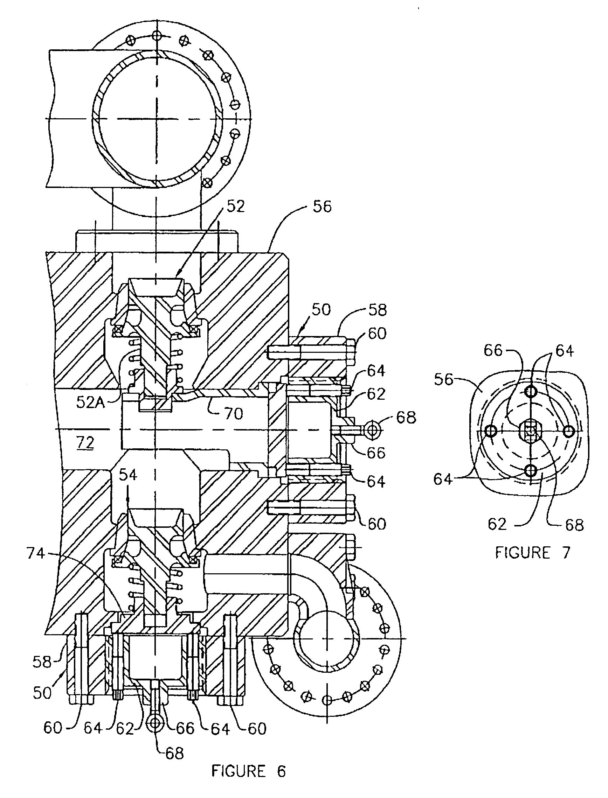

Figures 5, 6 and 7 illustrate a further compression generator 50 which is not claimed and comprises retainer cores for suction and pressure valves 52 and 54, respectively in a valve manifold 56. Two independent collars 58 are attached by threaded fasteners 60 to the sidewalls of the valve manifold 56. Each collar has a central opening containing screw threads, bayonet lugs, or component parts of other suitable fastening systems for interlocking engagement to mount a disk shaped access plug 62. In this illustrated arrangement, the collar and plug for each compression generator have mating screw threads. Each disk shaped access plug contains a plurality of threaded bores distributed about a bolt circle and receiving jackbolts 64 for generating pushing forces along axial paths corresponding to the longitudinal central axes of the jackbolts. This assembly the jackbolts form a mechanically operative stress-generating unit releasable attached to the manifold.

A hex nut member 66 is located in the central face area of the collar for torquing the access plug during assembly and disassembly of the access plug in the collars 58. A centrally located aperture is threaded to engage a threaded end of an eyebolt 68 used as an aid when handling the access plug. The suction valve 52 is mounted in a holder 70 pressed by operation of the jackbolts 64 against a mounting surface located in the valve manifold 56 to present the suction valve 52 in an operative position extending in a pressure chamber 72 so that a spring biased valve plunger 52A of the valve is seated against a valve seat provided in a valve manifold 56. In this manner, the jackbolts are used to inhibit sliding movement between members forming a barrier used to confine a volume of highly pressurized fluid and generate sufficient friction to prevent unwanted passage of pressurized fluid between seated sealing surfaces. The pressure valve 54 is pressed by operation of the ackbolts 64 against a mounting surface 74 formed in a high pressure exhaust chamber of the valve manifold 56 and thereby position a spring biased valve plunger 54A against a valve seat located in a in a valve manifold 56. A fluid medium, such gas, or liquid is acted on by operation of a piston reciprocated in a chamber communicating with a port 56A.

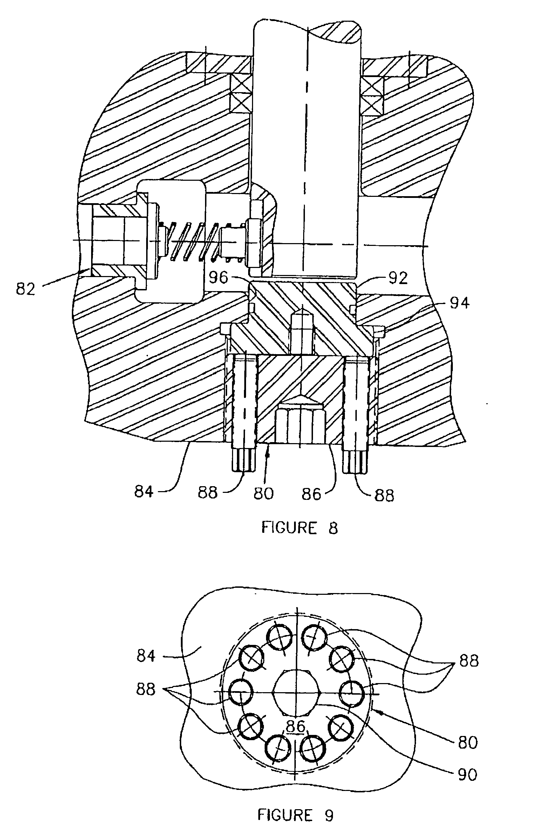

Figures 8 and 9 illustrate a still further compression generator 80 which also is not claimed and comprises a retainer for providing access to a suction valve 82 in a valve manifold 84. A core element is provided by a disk shaped retainer 86 is secured by a threaded periphery to the threads in an aperture formed in the sidewall of the valve manifold 84. An alternative to the use of screw threads for mounting the retainer to the valve manifold is bayonet lugs or component parts of other suitable fastening systems. The disk shaped access retainer contains a plurality of threaded bores distributed about a bolt circle and receiving jackbolts 88 for generating pushing forces along axial paths corresponding to the longitudinal central axes of the jackbolts. This assembly of jackbolts serves to provide a mechanically operative stress-generating unit releasable attached to the manifold.

A hex nut cavity 90 is located in the central face area of the retainer for torquing the retainer during assembly and disassembly of a suction valve cover 92 in the manifold. The suction valve cover 92 is pressed into seating engagement against mounting surface 94 by operation of the jackbolts 88, which also maintains an O-ring in an annular recess seated against the annular sidewall 96 extending to the mounting surface. The use of the jackbolts facilitate removal of the retainer and the suction valve cover for routine inspection and servicing of a suction valve mounted in the valve manifold and generate sufficient friction to prevent unwanted passage of pressurized fluid between seated sealing surfaces.

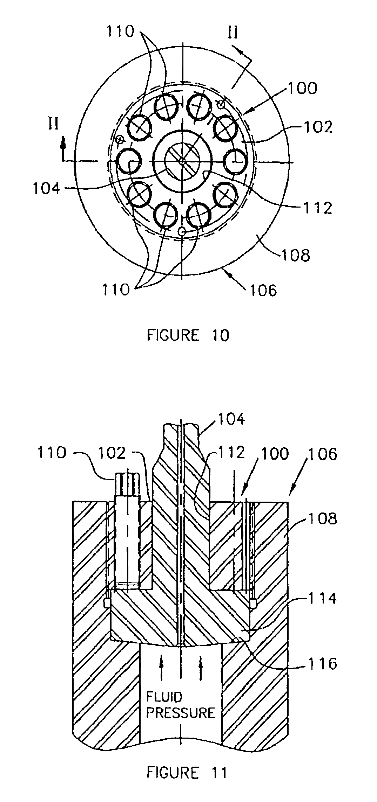

Figures 10, and 11 illustrate a still further compression generators 100 which also is not claimed and comprises retainers 102 for installing a high pressure fluid orifice 104 at an end of an accumulator assembly 106 forming part of a high pressure water jet system. A core element is provided by a disk shaped configuration of the retainer 102 mounted by a threaded periphery to the threads in an aperture formed in an enlarged bore at the end portion of a cylindrical member 108. The disk shaped retainer 102 contains a plurality of threaded bores distributed about a bolt circle and receiving jackbolts 110 for generating pushing forces along axial paths corresponding to the longitudinal central axes of the jackbolts. This assembly of jackbolts also serves to provide a mechanically operative stress-generating unit releasable attached to the cylindrical member 108. A central bore 112 in the disk shaped retainer 102 allows a mechanically free passage of a reduced diameter nozzle portion of the high-pressure fluid orifice 104. The high-pressure fluid orifice 104 has an enlarged cylindrical base 114 pressed into a seated, fluid tight engagement juxtaposition from a compression seat formed by mounting surfaces 116 by operation of the jackbolts 110 without the use of an O-ring or other form of a seal.

While the present invention has been described in connection with the preferred embodiments of the various figures, it is to be understood that other similar embodiments may be used or modifications and additions may be made to the described embodiment for performing the same function of the present invention without deviating there from. Therefore, the present invention should not be limited to any single embodiment, but rather construed in breadth and scope in accordance with the recitation of the appended claims.

## Claims

1. A compression generator for forming a mechanical connection between opposed fixed (14) and moveable (12) parts by transmitting a pushing force against the end part (16) of said moveable (12) part, the compression generator comprising:
- said fixed (14) and moveable (12) parts,
- at least one carrier (32) including a thread on the external peripheral edge thereof for retained support by said fixed part (14) in a confronting relation to said moveable part (12),
- a compression shoe (34),
**characterized in that** the compression generator further comprises
- a plurality of jackbolts (38) each received in one of a plurality of holes (32A) at spaced-apart locations about an outer peripheral part of said carrier (32) for receiving torque to generate said pushing force, the compression shoe (34) engaged between said plurality of jackbolts (38) and the end portion (16) of said movable part (12),
- a spindle (42) extending through a bore (32B) in said carrier (32), and
- a nut (46) mounted on an outwardly extending threaded end of the spindle (42) and dimensioned to seat in a counter bore (32C) to provide guided movement of the splindle (42) throughout a desired range in an annular gap between the end portion (16) of the movable part (12) and the fixed part (14).

2. The compression generator of claim 1 wherein the end portion (16) of the movable part (12) comprises a centrally located annular ring section (18) bounded by annular grooves (20 and 22) for generating friction by torquing of said plurality of jackbolts (38) to move said compression shoe (34) toward said end portion (16) of the movable part (12).

3. The compression generator of claim 2 wherein the end portion (16) of the movable part (12) further comprises terminating annular ring sections (24 and 26) of reduced outside diameters as compared with the outside diameter of the movable part (12).

4. The compression generator of claims 2 or 3 wherein the compression shoe (34) comprises two parallel and side-by-side compression ribs (39) spaced apart by a central recess (40) to establish interlocking engagement with the annular ring section (18) of the end portion (16) of the movable part (12).

5. The compression generator of claims 1-4 wherein the carrier (32) is defined by a disk shaped configuration having a thickness of approximately the wall thickness of the fixed part (14).

6. The compression generator of claims 1-5 wherein the fixed part (14) comprises four threaded bores (30) arranged with the central axes (30A) thereof lying in a common plane that is perpendicular to the longitudinal and central axis of the fixed part (14).

7. The compression generator of claim 6 wherein the four threaded bores (30) are arranged as opposed pairs having the axes (30A) of a pair coaxially arranged.

8. The compression generator of claim 7 wherein each of said carriers (32) having jackbolts (38) is secured in one of said threaded bores (30) for extending from said carrier (32) into confronting engagement with a respective compression shoe (34).

## Patentansprüche

1. Ein Druckgenerator zum Bilden einer mechanischen Verbindung zwischen gegenüberliegenden feststehenden (14) und bewegbaren (12) Teilen durch Übertragen einer Druckkraft gegen den Endteil (16) des bewegbaren (12) Teils, der Druckgenerator umfassend:
- feststehende (14) und bewegbare (12) Teile,
- zumindest einen Halter (32) einschließlich eines Gewindes an dem äuberen umfangsseitigen Rand für anhaltende Unterstützung durch das feststehende Teil (14) in einer gegenüberliegenden Anordnung zum bewegbaren Teil (12),
- einen Kompressionsschuh (34),
**dadurch gekennzeichnet, dass** der Druckgenerator des Weiteren umfasst,
- eine Vielzahl von Verspannschrauben (38), jede in einem von einer Vielzahl von Löchern (32A) an durch abstände getrennten Positionen um einen äußeren ringförmigen Teil des Halters (32) aufgenommen, zum Aufnehmen eines Drehmoments zur Erzeugung der Druckkraft, der Kompressionsschuh (34) in Eingriff stehend zwischen der Vielzahl an Verspannsshrauben (38) und dem Endabschnitt (16), des bewegbaren Teils (12),
- eine Achse (42) sich erstreckend durch eine Bohrung (32B) im Halter (32), und
- eine Mutter (46) montiert auf einem sich nach außen erstreckenden Ende mit Gewinde der Achse (42) und ausgelegt um in einem Konterbohrloch (32C) zu sitzen, um eine geführte Bewegung der Achse (42) bereitzustellen über einen Verlangten Bereich in einem ringförmigen Spalt zwischen dem Endteil (16) des bewegbaren Teils (12) und dem feststehenden Teil (14).

2. Der Druckgenerator gemäß Anspruch 1, wobei das Endteil (16) des bewegbaren Teils (12) eine zentral positionierte ringförmige Ringsektion (18) umfasst, begrenzt durch ringförmige Nuten (20 und 22) zum Erzeugen von Reibung durch Ansiehen der Vielzahl von Verspannschrauben (38), um den Kompressionsschuh (34) an Richtung des Endabschnitts (16) des bewegbaren Teils (12) zu bewegen.

3. Der Druckgenerator gemäß Anspruch 2, wobei der Endabschnitt (16.) des bewegbaren Teils (12) weiterhin abschließende ringförmige Ringsektionen (24 und 26) aufweist, verringerten äußeren Durchmessere im Vergleich zu dem äußeren Durchmesser des bewegbaren Teils (12).

4. Der Druckgenerator gemäß Anspruch 2 oder 3, wobei der Kompressionsschuh (34) zwei parallele und Seite an Seite liegende Kompressionerippen (39) umfasst, beabstandet durch eine zentrale Vertiefung (40), um einen verriegelnden Eingriff mit der ringförmigen Ringsektion (18) des Endabschritts (16) des bewegbaren Teils (12) zu bilden.

5. Der Druckgenerator gemäß einem der Ansprüche 1-4, wobei der Halter (32) durch eine scheibenförmige Konfiguration definiert ist, aufweisend eine Dicke von ungefähr der Wanddicke des feststehenden Teils (14).

6. Der Druckgenerator gemäß einem der Ansprüche 1-5, wobei das feststehende Teil (14) vier Gewindebohrungen (30) umfasst, angeordnet mit der zentralen Achse (30A) liegend in einer gemeinsamen Ebene, die senkrecht zu der Länge- und Zentralachse des feststehenden Teils (14) ist.

7. Der Druckgenerator gemäß Anspruch 6, wobei die vier Gewindebohrungen (30) als gegenüberliegende Paare angeordnet sind, die Achsen (30A) eines Paars koaxial angeordnet.

8. Der Druckgenerator gemäß Anspruch 7, wobei jeder Ralter (32), Verspannschrauben (38) aufweisend, gesichert ist in einer der Gewindebohrungen (30), sich erstreckend von dem Halter (32) bis zum gegenüberliegenden Eingriff mit einem jeweiligen Kompressionsschuh (34).

## Revendications

1. Générateur de compression pour former une liaison mécanique entre des parties fixe (14) et mobile (12) opposées par transmission d'une force de poussée contre la partie d'extrémité (16) de ladite partie mobile (12), le générateur de compression comprenant :
- lesdites parties fixe (14) et mobile (12),
- au moins un support (32) comprenant un filetage sur le bord périphérique extérieur de celui-ci pour un support maintenu par ladite partie fixe (14) en relation de vis-à-vis avec ladite partie mobile (12),
- une semelle de compression (34),
**caractérisé en ce que** le générateur de compression comprend de plus :
- une pluralité de vis de décollage (38) reçues chacune dans l'un d'une pluralité de trous (32A) en des emplacements mutuellement espacés autour d'une partie périphérique extérieure dudit support (32) pour recevoir un couple afin de générer ladite force de poussée, la semelle de compression (34) venant en prise entre ladite pluralité de vis de décollage (38) et la partie d'extrémité (16) de ladite partie mobile (12),
- un arbre rotatif (42) s'étendant à travers un alésage (32B) dans ledit support (32), et
- un écrou (46) monté sur une extrémité filetée s'étendant vers l'extérieur de l'arbre rotatif (42) et dimensionné de façon à être logé dans un contre-alésage (32C) de façon à produire un déplacement guidé de l'arbre rotatif (42) dans toute une plage désirée dans un espace annulaire entre la partie d'extrémité (16) de la partie mobile (12) et la partie fixe (14).

2. Générateur de compression selon la revendication 1, dans lequel la partie d'extrémité (16) de la partie mobile (12) comprend une section de bague annulaire disposée de façon centrale (18) délimitée par des rainures annulaires (20 et 22) afin de générer un frottement par l'établissement d'un couple de ladite pluralité de vis de décollage (38) de façon à déplacer ladite semelle de compression (34) vers ladite partie d'extrémité (16) de la partie mobile (12).

3. Générateur de compression selon la revendication 2, dans lequel la partie d'extrémité (16) de la partie mobile (12) comprend de plus des sections de bague annulaires de terminaison (24 et 26) ayant des diamètres extérieurs réduits par rapport au diamètre extérieur de la partie mobile (12).

4. Générateur de compression selon les revendications 2 ou 3, dans lequel la semelle de compression (34) comprend deux nervures de compression parallèles et côte-à-côte (39) espacées l'une de l'autre par une cavité centrale (40), de façon à établir une prise de verrouillage mutuel avec la section de bague annulaire (18) de la partie d'extrémité (16) de la partie mobile (12).

5. Générateur de compression selon les revendications 1 à 4, dans lequel le support (32) est défini par une configuration en forme de disque ayant une épaisseur approximativement identique à l'épaisseur de paroi de la partie fixe (14).

6. Générateur de compression selon les revendications 1 à 5, dans lequel la partie fixe (14) comprend quatre alésages filetés (30) disposés avec leurs axes centraux (30A) qui se trouvent dans un plan commun qui est perpendiculaire à l'axe longitudinal et central de la partie fixe (14).

7. Générateur de compression selon la revendication 6, dans lequel les quatre alésages filetés (30) sont disposés sous la forme de paires opposées, les axes (30A) d'une paire étant disposés de façon coaxiale.

8. Générateur de compression selon la revendication 7, dans lequel chacun desdits supports (32) comportant des vis de décollage (38) est fixé dans l'un desdits alésages filetés (30) de façon à s'étendre à partir dudit support (32) en prise de vis-à-vis avec une semelle de compression respective (34).
